# EUROPEAN PATENT APPLICATION

(11) **EP 4 446 076 A1**
(43) Date of publication of application: **16.10.2024**
(21) Application number: 24161781.0
(22) Date of filing: 06.03.2024
(51) Int. Cl.: B26F 1/24, B26D 1/00, C04B 35/634, C04B 35/80, C04B 35/565, B29B 11/16

(54) **A METHOD OF FORMING A CERAMIC MATRIX COMPOSITE, AND A PIN ARRAY**

(30) Priority: 07.03.2023 US 202318118466
(71) Applicant: RTX Corporation, Farmington, CT 06032 (US)
(72) Inventor: KONOPASKE, Zachary Paul, East Hartford, 06118 (US); KOLE, Molly, East Hartford, 06118 (US); RIEHL, John D., East Hartford, 06118 (US)
(74) Representative: Dehns

(57) **Abstract**

A method of forming a ceramic matrix composite includes arranging a plurality of ceramic fibers into a preform (10), mounting the preform (10) within a tooling fixture (18), perforating the preform (10) to form a plurality of z-channels (16), each of the plurality of z-channels (16) extending completely through a thickness of the preform (10), pushing a pin array (24) against a surface (12) of the preform (10) through infiltration holes (20) in the tooling fixture (18) to apply a compressive force on the preform (10), and subsequently, removing the pin array (24) from the surface (12) of the preform (10). The pin array (24) includes a plurality of pins (26) extending from a backplate (28). Each of the plurality of pins (26) is aligned with a respective infiltration hole (20) of the tooling fixture (18).

## Description

### BACKGROUND

The present invention relates to the fabrication of ceramic matrix composites (CMCs) and, more particularly, to CMCs having improved properties for operating in gas turbine engines.

In the processing of CMCs, there is a need to infiltrate matrix within and around fibrous tow bundles to replace pore volume with dense matrix material. In a woven system, large voids often exist between adjacent tows of a preform. Such voids can become large defects after infiltration of the composite that are detrimental to composite properties. The pore network through a woven system is often highly tortuous for infiltrating reactant vapors, which leads to uneven deposition through the thickness of the preform. The formation of z-channels can create more direct pathways for reactant gases, however, their formation can create localized deformations on the preform surfaces leading to defects after chemical vapor infiltration (CVI). Thus, a need exists for means to facilitate even matrix infiltration.

### SUMMARY

A method of forming a ceramic matrix composite includes arranging a plurality of ceramic fibers into a preform, mounting the preform within a tooling fixture, perforating the preform to form a plurality of z-channels, each of the plurality of z-channels extending completely through a thickness of the preform, pushing a pin array against a surface of the preform through infiltration holes in the tooling fixture to apply a compressive force on the preform, and subsequently, removing the pin array from the surface of the preform. The pin array includes a plurality of pins extending from a backplate. Each of the plurality of pins is aligned with a respective infiltration hole of the tooling fixture.

A pin array for minimizing surface deformations of a perforated preform mounted within a tooling fixture includes a backplate, and a plurality of pins extending away from the backplate, each of the plurality of pins having a pin diameter. A position of the plurality of pins corresponds to a plurality of infiltration holes of the tooling fixture.

### Features of embodiments are set forth in the dependent claims.

### BRIEF DESCRIPTION OF THE DRAWINGS

FIG. 1 is a simplified cross-sectional illustration of a fibrous preform with z-channels.
FIG. 2 is a simplified cross-sectional illustration of the fibrous preform of FIG. 1 undergoing surface defect minimization via a pin array.
FIG. 3 is a simplified close-up view of a pin belonging to the pin array of FIG. 2.
FIG. 4 is a simplified cross-sectional illustration of the fibrous preform of FIG. 1 undergoing surface defect minimization via an alternative pin array.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

This disclosure presents means for controlling surface defects in a perforated fibrous ceramic preform. A pin array can be used to apply a compressive force to the surface of the preform where z-channels have been formed. The force helps to smooth out broken fiber pieces near the preform surfaces caused by needle movement and friction during z-channel formation. The resulting CMC can be more uniformly densified with matrix due to the z-channels, while minimizing the negative thermal and/or aerodynamic impacts from z-channel surface defects.

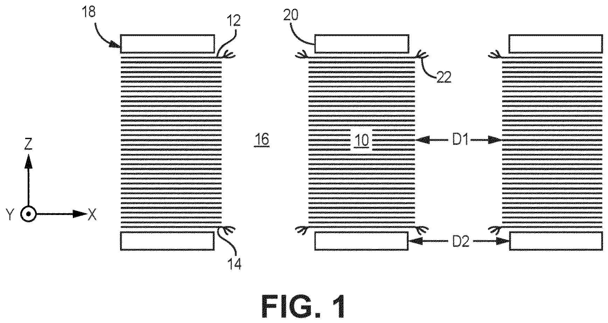

FIG. 1 is a simplified cross-sectional illustration of a portion of preform 10 after z-channel formation. Preform 10 can be formed from ceramic (e.g., silicon carbide - SiC) fibers arranged in one of various two or three-dimensional woven architectures such as plain, harness (e.g., 3, 5, 8, etc.), twill, braid, or non-symmetric architectures to name a few non-limiting examples. Nonwoven architectures (e.g., chopped, felted, etc.) are also contemplated herein. Preform 10 can become a component for a gas turbine engine such as an airfoil or platform (e.g., for a vane or blade) or a blade outer air seal (BOAS), to name a few non-limiting examples.

Preform 10 includes oppositely disposed outer surfaces 12 and 14 and z-channels 16 extending along the z-axis between surface 12 and 14, such that each z-channel 16 extends entirely through the thickness of preform 10. Z-channels 16 can be generally cylindrical in an exemplary embodiment, with a uniform diameter D1 along the length of each z-channel. Z-channels provide a straight path into the thickness of preform 10 allowing densification in a midplane- (i.e., mid-thickness) out direction. Preform 10 is shown mounted within tooling fixture 18 which can be formed from one or a combination of graphite, refractory metals, and carbon-carbon composites. Tooling fixture 18 can include multiple infiltration holes 20 which allow reactant vapors to access preform 10 during CVI, and further facilitate processing (e.g., perforation) of preform 10 prior to CVI by allowing tools (e.g., needles) to contact preform 10. Each infiltration hole 20 can have a diameter D2 which can be equal to or greater than D1. Depending on the three-dimensional shape of infiltration holes 20 and/or z-channels 16, the respective diameters can alternative be widths (i.e., for non-circular/non-cylindrical geometries).

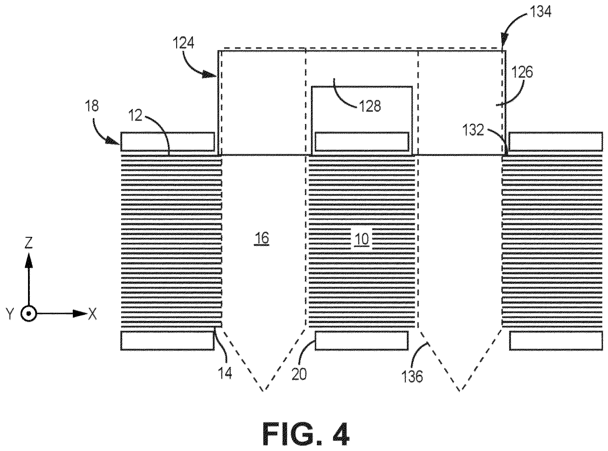

To form z-channels 16, a needle or array of needles (i.e., multiple needles arranged in row/columns) can be lined up with infiltration holes 20, pushed through preform 10, then removed. The insertion and/or removal of needles can create deformations, shown as frayed regions 22 within z-channels 16, especially near surfaces 12 and/or 14. This can occur because needles (shown and labeled in FIG. 4 as needles 136) damage and/or break individual fibers of preform 10, and friction between the needles and damaged/broken fibers can push or pull portions of the broken fibers out of alignment with the x-y plane. During CVI, frayed regions 22 can undesirably attract reactant vapors and cause excess matrix formation at their locations which can result in bumps along surface 12 and/or 14 of preform 10. These bumps can negatively impact the resulting CMC's thermal properties, and for aerospace components in particular, can degrade the efficiency of aerodynamic surfaces.

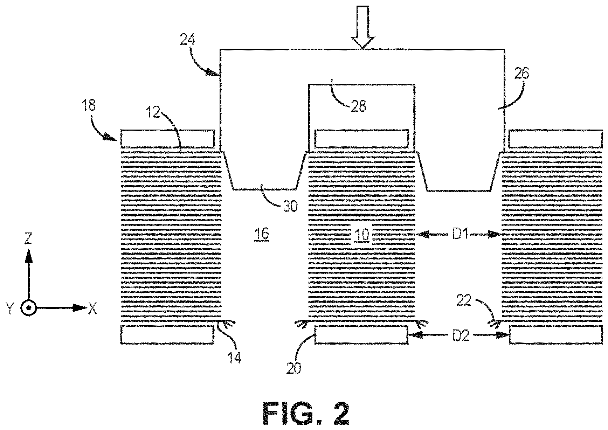

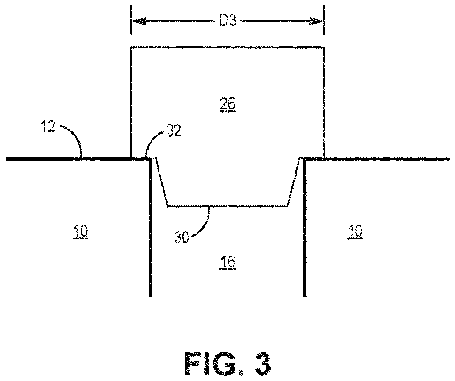

FIG. 2 is a simplified cross-sectional illustration of preform 10 of FIG. 1 undergoing surface deformation reduction via pins 26 of pin array 24. FIG. 3 is an enlarged view of a single pin 26 in contact with surface 12, shown for simplicity without tooling fixture 18. FIGS. 2 and 3 are discussed together.

As shown, pin array 24 is inserted through infiltration holes 20 of tooling fixture 18 such that is applies a downward force (as indicated by the direction of the arrow) with respect to outer surface 12 of preform 10. Pin array 24 includes multiple pins 26 extending from backplate 28. Pins 26 can be arranged in rows and columns, and can correspond to locations of infiltration holes 20 in tooling fixture 18. Each pin 26 can optionally include wedge portion 30 extending away from a respective pin 26 (i.e., on a side opposite backplate 28) and into z-channel 16 to prevent collapse of z-channel 16 near surface 12 while the downward/compressive force is being applied. Pin array 24 can be all or at least partially formed from a polymer material (e.g., plastic) in an exemplary embodiment, such that any potential contaminant material left in/on preform 10 from polymer pins 26 and/or wedges 30 would burn off during subsequent processing (e.g., during matrix formation). In an alternative embodiment, pin array 26 can be formed from a SiC-coated metallic material.

Pin 26 has a diameter (or width) D3 greater than diameter D1 of z-channel 16 such that pin 26 has shoulders 32 (FIG. 3) that overlap with/physically contact and apply force to surface 12. In this regard, pins 26 can also compress frayed regions 22 minimizing the extent to which they stick out in along the z-axis proximate surface 12. Diameter D3 can be less than infiltration hole diameter D2 so that tooling fixture 18 does not prevent each pin 26 from contacting preform 10. Pin array 24 can additionally and/or alternatively be used on opposing surface 14 of preform 10. In an alternative embodiment, a singular pin 26 (i.e., not in array form) can be used on multiple individual z-channels 16.

FIG. 4 is a simplified cross-sectional illustration of alternative hybrid pin array 124, which can be used for perforating preform 10, then reducing surface deformation. Pin array 124 is substantially similar to pin array 24 with multiple pins 126 extending from backplate 128. Although not shown in FIG. 4, each pin 126 can include optional wedge. Pins 126 are wider than z-channels 16 such that shoulders 132 overlap with and physically contact outer surface 12 of preform 10. Pin array 124 can similarly be formed from a polymer material.

Pin array 124 differs in that it can accommodate needle array 134 (shown in dashed lines in FIG. 4) with multiple needles 136 corresponding to the location of pins 126. In this regard, pins 126 can be cylinders (i.e., with hollow centers) allowing spikes 136 to be inserted and removed therethrough. In one embodiment, needle array 134 can be separable from pin array 124 with needle array 124 manually inserted and removed as pin array 124 remains in contact with surface 12 to prevent formation of frayed regions (not shown in FIG. 4) during preform perforation to create z-channels 16. In an alternative embodiment, needles 136 can be deployable and retractable via pneumatic means or spring loading from pin array 124. In an alternative embodiment, needles 136 can be manually deployed/retracted. Accordingly, pin array 124 can be used to minimize surface deformation while z-channels are being formed through the application of a downward force on surface 12 as needles 136 move along the z-axis into and out of preform 10.

To minimize surface deformation with pin arrays 24, 124, preform 10 can be mounted within tooling fixture 18, and pin array 24, 124 aligned with at least a subset of infiltration holes 20, depending on the area of pin array 24, 124. If preform 10 has already been perforated (i.e., z-channels 16 already formed), pin array 24 can be pushed downward on the exposed surface (e.g., surface 12) of preform 10 to flatten/smooth any frayed regions 22. If using hybrid pin array 124, pin array 124 can be pushed downward on the exposed surface (e.g., surface 12) of preform 10, while needles 136 are inserted into and removed from preform 10. Pin array 24, 124 can be removed from preform 10/tooling fixture 18 once the desired degree of surface deformation minimization has been carried out.

In some embodiments, it can be desirable to locally apply an amount of liquid binder, such as a mixture of polyvinyl alcohol (PVA) and water, or polyvinyl butyral (PVB) and ethanol to surface 12 at the location of z-channels 16, or directly to pins 26, 126 to add "tack" to frayed regions 22 to facilitate tighter packing of broken fiber pieces as pins 26, 126 are pushed against the surface, and to help maintain the packing after pins 26, 126 are remove. If binder is supplementally used in this manner, preform 10 may require a drying step (e.g., using heat) before undergoing subsequent processing.

A ceramic (e.g., SiC) matrix can be deposited on the perforated preform 10 using CVI, which can be carried out until the resulting CMC has reached the desired residual porosity. Other techniques for matrix formation are contemplated herein, such as one or a combination of slurry infiltration, melt infiltration, and polymer infiltration and pyrolysis. Such techniques can supplement the CVI process. Protective coatings for the CMC (e.g., thermal barrier coatings, environmental barrier coatings, etc.) can optionally be applied after densification with the matrix.

### Discussion of Possible Embodiments

The following are non-exclusive descriptions of possible embodiments of the present invention.

A method of forming a ceramic matrix composite includes arranging a plurality of ceramic fibers into a preform, mounting the preform within a tooling fixture, perforating the preform to form a plurality of z-channels, each of the plurality of z-channels extending completely through a thickness of the preform, pushing a pin array against a surface of the preform through infiltration holes in the tooling fixture to apply a compressive force on the preform, and subsequently, removing the pin array from the surface of the preform. The pin array includes a plurality of pins extending from a backplate. Each of the plurality of pins is aligned with a respective infiltration hole of the tooling fixture.

The method of the preceding paragraph can optionally include, additionally and/or alternatively, any one or more of the following features, configurations and/or additional components:
In the above method, perforating the preform can include pushing a plurality of needles through the thickness of the preform, each of the plurality of needles forming one of the plurality of z-channels.

In any of the above methods, perforating the preform forms a plurality of frayed regions at the surface of the preform, and pushing the pin array against a surface of the preform can include pressing the plurality of pins against the frayed regions such that the frayed regions are flattened or smoothed.

In any of the above methods, pushing the pin array against the surface of the preform can occur simultaneously to perforating the preform, such that the plurality of frayed regions at the surface of the preform are minimized or prevented by the pushing of the pin array against the surface of the preform.

In any of the above methods, each of the plurality of pins can include a shoulder portion, the shoulder portion configured to physically contact one of the plurality of frayed regions when the pin array is pushed against the surface of the preform.

In any of the above methods, each of the plurality of pins can further include a wedge portion extending at least partially into the z-channel when the shoulder is in physical contact with the surface of the preform.

Any of the above methods can further include prior to pushing the pin array against the surface of the preform, applying an amount of liquid binder to one of the plurality of pins and the surface of the preform.

In any of the above methods, the liquid binder can include one of a mixture of polyvinyl alcohol with water, and a mixture of polyvinyl butyral with ethanol.

Any of the above methods can further include after removing the pin array from the surface of the preform, densifying the preform with a ceramic matrix using chemical vapor infiltration.

A pin array for minimizing surface deformations of a perforated preform mounted within a tooling fixture includes a backplate, and a plurality of pins extending away from the backplate, each of the plurality of pins having a pin diameter. A position of the plurality of pins corresponds to a plurality of infiltration holes of the tooling fixture.

The pin array of the preceding paragraph can optionally include, additionally and/or alternatively, any one or more of the following features, configurations and/or additional components:
In the above pin array, each of the plurality of infiltration holes can have a hole diameter larger than the pin diameter such that each of the plurality of pins are maneuverable into and out of the plurality of infiltration holes.

In any of the above pin arrays, the position of at least a subset of the plurality of pins can correspond to a plurality of z-channels formed in the preform.

In any of the above pin arrays, each of the plurality of z-channels can extend from a first surface of the preform to an opposing second surface of the preform.

In any of the above pin arrays, each of the plurality of z-channels can have a channel diameter, the channel diameter being less than the pin diameter.

In any of the above pin arrays, each of the plurality of pins can include a shoulder portion engageable with either the first surface or opposing second surface of the preform.

In any of the above pin arrays, each of the plurality of pins can further include a wedge portion extending away from the pin and insertable into at least a portion of a respective z-channel.

In any of the above pin arrays, each of the plurality of pins can be formed as a cylinder with a hollow center.

Any of the above pin arrays can further include a needle array comprising a plurality of needles, each of the plurality of needles corresponding to one of the plurality of pins.

In any of the above pin arrays, each of the plurality of needles can be maneuverable into and out of the hollow center of the pin.

In any of the above pin arrays, the pin array can be at least partially formed from a polymer material.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a ceramic matrix composite, the method comprising:
arranging a plurality of ceramic fibers into a preform (10);
mounting the preform (10) within a tooling fixture (18);
perforating the preform (10) to form a plurality of z-channels (16), each of the plurality of z-channels (16) extending completely through a thickness of the preform (10);
pushing a pin array (24; 124) against a surface (12; 14) of the preform (10) through infiltration holes (20) in the tooling fixture (18) to apply a compressive force on the preform (10), the pin array (24; 124) comprising:
a plurality of pins (26; 126) extending from a backplate (28; 128);
wherein each of the plurality of pins (26; 126) is aligned with a respective infiltration hole (20) of the tooling fixture (18); and
subsequently, removing the pin array (24; 124) from the surface of the preform (10).

2. The method of claim 1, wherein perforating the preform (10) comprises: pushing a plurality of needles (136) through the thickness of the preform (10), each of the plurality of needles (136) forming one of the plurality of z-channels (16).

3. The method of claim 2, wherein perforating the preform (10) forms a plurality of frayed regions (22) at the surface (12; 14) of the preform (10), and wherein pushing the pin array (24; 124) against the surface (12; 14) of the preform (10) comprises pressing the plurality of pins (26; 126) against the frayed regions (22) such that the frayed regions (22) are flattened or smoothed, optionally wherein pushing the pin array (24; 124) against the surface (12; 14) of the preform (10) occurs simultaneously to perforating the preform (10), such that the plurality of frayed regions (22) at the surface (12; 14) of the preform (10) are minimized or prevented by the pushing of the pin array (24; 124) against the surface (12; 14) of the preform (10).

4. The method of any preceding claim, wherein each of the plurality of pins (26; 126) comprises: a shoulder portion (32; 132), the shoulder portion (32; 132) configured to physically contact one of the plurality of frayed regions (22) when the pin array (24; 124) is pushed against the surface (12; 14) of the preform (10), optionally wherein each of the plurality of pins (26; 126) further comprises: a wedge portion (30) extending at least partially into the z-channel when the shoulder portion (32; 132) is in physical contact with the surface (12; 14) of the preform (10).

5. The method of any preceding claim and further comprising: prior to pushing the pin array (24; 124) against the surface (12; 14) of the preform (10), applying an amount of liquid binder to one of the plurality of pins (26; 126) and the surface (12; 14) of the preform (10), optionally wherein the liquid binder comprises one of:
a mixture of polyvinyl alcohol with water; and
a mixture of polyvinyl butyral with ethanol.

6. The method of any preceding claim and further comprising: after removing the pin array (24; 124) from the surface (12; 14) of the preform (10), densifying the preform (10) with a ceramic matrix using chemical vapor infiltration.

7. A pin array (24; 124) for minimizing surface deformations of a perforated preform (10) mounted within a tooling fixture (18), the pin array (24; 124) comprising:
a backplate (28; 128); and
a plurality of pins (26; 126) extending away from the backplate (28; 128), each of the plurality of pins (26; 126) having a pin diameter (D3);
wherein, a position of the plurality of pins (26; 126) corresponds to a plurality of infiltration holes (20) of the tooling fixture (18).

8. The pin array of claim 7, wherein each of the plurality of infiltration holes (20) has a hole diameter (D2) larger than the pin diameter (D3) such that each of the plurality of pins (26; 126) are maneuverable into and out of the plurality of infiltration holes (20).

9. The pin array of claim 8, wherein the position of at least a subset of the plurality of pins (26; 126) corresponds to a plurality of z-channels (16) formed in the preform (10).

10. The pin array of claim 9, wherein each of the plurality of z-channels (16) extends from a first surface (12) of the preform (10) to an opposing second surface (14) of the preform (10), optionally wherein each of the plurality of z-channels (16) has a channel diameter (D 1), the channel diameter (D1) being less than the pin diameter (D3).

11. The pin array of claim 10, wherein each of the plurality of pins (26; 126) comprises a shoulder portion (32; 132) engageable with either the first surface (12) or opposing second surface (14) of the preform (10).

12. The pin array of any of claims 9 to 11, wherein each of the plurality of pins (26; 126) further comprises a wedge portion (30) extending away from the pin (26; 126) and insertable into at least a portion of a respective z-channel (16).

13. The pin array of any of claims 7 to 12, wherein each of the plurality of pins (126) is formed as a cylinder with a hollow center.

14. The pin array of claim 13, and further comprising: a needle array (134) comprising a plurality of needles (136), each of the plurality of needles (136) corresponding to one of the plurality of pins (126), optionally wherein each of the plurality of needles (136) is maneuverable into and out of the hollow center of the pin (126).

15. The pin array of any of claims 7 to 14, wherein the pin array (24; 124) is at least partially formed from a polymer material.
